# EUROPEAN PATENT APPLICATION

(11) **EP 3 073 468 A1**
(43) Date of publication of application: **28.09.2016**
(21) Application number: 16161355.9
(22) Date of filing: 21.03.2016
(51) Int. Cl.: G09B 23/30

(54) **SIMULATED ORGAN AND BLOOD VESSELS**

(30) Priority: 23.03.2015 JP 2015059278
(71) Applicant: Seiko Epson Corporation, Shinjuku-ku Tokyo 163-0811 (JP)
(72) Inventor: Sekino, Hirokazu, Nagano 392-8502 (JP); Miyazaki, Koichiro, Nagano 392-8502 (JP); Ito, Jiro, Nagano 392-8502 (JP)
(74) Representative: Hoffmann Eitle

(57) **Abstract**

A simulated organ includes two simulated blood vessels intersecting with each other.

## Description

### BACKGROUND

### 1. Technical Field

The present invention relates to a simulated organ.

### 2. Related Art

As a tool for practicing vascular injections, a structure in which a plurality of simulated blood vessels is arranged in parallel is known (JP-UM-A-6-4768).

In the related-art technique, since a plurality of simulated blood vessels is arranged in parallel, the arrangement of blood vessels in an actual living body cannot be reproduced.

### SUMMARY

An advantage of some aspects of the invention is that simulated blood vessels can be arranged similarly to blood vessels in an actual living body.

The invention can be implemented in the following forms.
(1) An aspect of the invention provides a simulated organ. The simulated organ includes a first simulated blood vessel, and a second simulated blood vessel intersecting with the first simulated blood vessel. According to this configuration, the simulated blood vessels can be arranged more similarly to blood vessels in an actual living body. This is because, in an actual living body, blood vessels may intersect with each other.
(2) In the aspect of the invention, the simulated organ may further include a third simulated blood vessel intersecting with the first simulated blood vessel. According to this configuration, a site having intersections at a plurality of positions can be reproduced.
(3) In the aspect of the invention, a distance between the second simulated blood vessel and the third simulated blood vessel may be 3 mm or shorter. According to this configuration, a site which is dense with blood vessels can be reproduced.
(4) In the aspect of the invention, the second simulated blood vessel may be arranged at a deeper position than the first simulated blood vessel, at a site intersecting with the first simulated blood vessel, and the third simulated blood vessel may be arranged at a shallower position than the first simulated blood vessel, at a site intersecting with the first simulated blood vessel. According to this configuration, a site with complex intersections can be reproduced.
(5) In the aspect of the invention, a site intersecting with the first simulated blood vessel, of the second simulated blood vessel, may be arranged at a deeper position than a site intersecting with the first simulated blood vessel, of the third simulated blood vessel. According to this configuration, a site with complex intersections can be reproduced.
(6) In the aspect of the invention, a color appearing in the second simulated blood vessel when damaged may be different from a color appearing in the third simulated blood vessel when damaged. According to this configuration, it is easier to find out which of the second simulated blood vessel and the third simulated blood vessel is damaged. The color appearing in the second simulated blood vessel when not damaged may be the same as or different from the color appearing in the third simulated blood vessel when not damaged.
(7) In the aspect of the invention, a site intersecting with the second simulated blood vessel, of the first simulated blood vessel, may be arranged at a shallower position than a site intersecting with the third simulated blood vessel. According to this configuration, a site where the first simulated blood vessel changes in the direction of depth can be reproduced.
(8) In the aspect of the invention, the first simulated blood vessel may be in different colors between a site arranged at a shallower position than the second simulated blood vessel and a site arranged at a deeper position than the third simulated blood vessel. According to this configuration, at what depth the site of the first simulated blood vessel is can be found more easily.
(9) In the aspect of the invention, a color of a site situated between a site intersecting with the second simulated blood vessel and a site intersecting with the third simulated blood vessel, of the first simulated blood vessel, may be different from a color of the site intersecting with the second simulated blood vessel and different from a color of the site intersecting with the third simulated blood vessel. According to this configuration, the site situated between the site intersecting with the second simulated blood vessel and the site intersecting with the third simulated blood vessel can be discriminated more easily from the site intersecting with the second simulated blood vessel and the site intersecting with the third simulated blood vessel.
(10) In the aspect of the invention, the first simulated blood vessel may be in a different color from a color of the second simulated blood vessel. According to this configuration, the first simulated blood vessel and the second simulated blood vessel can be discriminated from each other more easily.
(11) In the aspect of the invention, the simulated organ may further include a simulated tissue filling peripheries of the first and second simulated blood vessels. The simulated tissue may be in different colors between a first site situated below the second simulated blood vessel and a second site different from the first site. According to this configuration, whether the first site has been successfully excised or not can be found more easily.
(12) In the aspect of the invention, the first site may be a site situated below a site where the first simulated blood vessel and the second simulated blood vessel intersect with each other. According to this configuration, a site that is difficult to excise can be set as the first site.
(13) In the aspect of the invention, a color of the first site may be different from a color of the first simulated blood vessel and different from a color of the second simulated blood vessel. According to this configuration, the first site can be discriminated more easily from the first and second simulated blood vessels.
(14) In the aspect of the invention, the simulated tissue may be excised by a liquid provided with an excision capability.

The invention can also be implemented in various other forms. For example, the invention can be implemented as a method for preparing a simulated organ.

### BRIEF DESCRIPTION OF THE DRAWINGS

The invention will be described with reference to the accompanying drawings, wherein like numbers reference like elements.
FIG. 1 shows the schematic configuration of a liquid ejection device.
FIG. 2 is a top view showing a simulated organ.
FIG. 3 is a cross-sectional view showing the simulated organ.
FIG. 4 is a cross-sectional view showing the state where a simulated tumor has been extirpated.
FIG. 5 is a flowchart showing a method for preparing a simulated organ.
FIG. 6 shows how a strength test on the material of a simulated blood vessel is conducted.
FIG. 7 is a graph showing an example of experiment data obtained by the strength test.
FIG. 8 is a cross-sectional view showing the state where simulated blood vessels are fixed.
FIG. 9 is a cross-sectional view showing a simulated organ (modification).
FIG. 10 is a cross-sectional view showing a simulated organ (modification).

### DESCRIPTION OF EXEMPLARY EMBODIMENTS

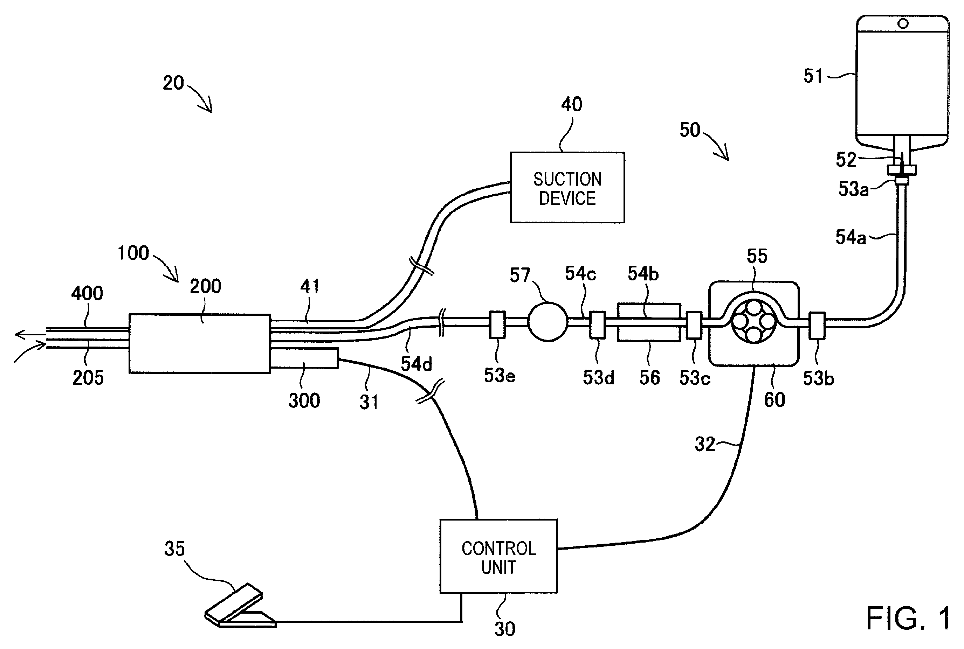

FIG. 1 schematically shows the configuration of a liquid ejection device 20. The liquid ejection device 20 is a medical device used in a medical institution and has the function of excising an affected part by ejecting a liquid to the affected part.

The liquid ejection device 20 has a control unit 30, an actuator cable 31, a pump cable 32, a foot switch 35, a suction device 40, a suction tube 41, a liquid supply device 50, and a handpiece 100.

The liquid supply device 50 has a water supply bag 51, a spike 52, first to fifth connectors 53a to 53e, first to fourth water supply tubes 54a to 54d, a pump tube 55, a blocking detection mechanism 56, and a filter 57. The handpiece 100 has a nozzle unit 200 and an actuator unit 300. The nozzle unit 200 has an ejection tube 205 and a suction tube 400.

The water supply bag 51 is made of a transparent synthetic resin and its inside is filled with a liquid (specifically, physiological saline solution). In this description, this bag is called the water supply bag 51 even if it is filled with a liquid other than water. The spike 52 is connected to the first water supply tube 54a via the first connector 53a. As the spike 52 stings the water supply bag 51, the liquid filling the water supply bag 51 becomes available to be supplied to the first water supply tube 54a.

The first water supply tube 54a is connected to the pump tube 55 via the second connector 53b. The pump tube 55 is connected to the second water supply tube 54b via the third connector 53c. A tube pump 60 has the pump tube 55 inserted therein. The tube pump 60 feeds the liquid inside the pump tube 55 from the side of the first water supply tube 54a toward the second water supply tube 54b.

The blocking detection mechanism 56 measures the pressure inside the second water supply tube 54b and thereby detects blocking inside the first to fourth water supply tubes 54a to 54d.

The second water supply tube 54b is connected to the third water supply tube 54c via the fourth connector 53d. To the third water supply tube 54c, the filter 57 is connected. The filter 57 collects foreign matters contained in the liquid.

The third water supply tube 54c is connected to the fourth water supply tube 54d via the fifth connector 53e. The fourth water supply tube 54d is connected to the nozzle unit 200. The liquid supplied through the fourth water supply tube 54d is intermittently ejected from the tip of the ejection tube 205 by the driving of the actuator unit 300. As the liquid is thus ejected intermittently, an excision capability can be secured with a low flow rate.

The ejection tube 205 and the suction tube 400 form a double-tube structure with the ejection tube 205 being the inner tube and the suction tube 400 being the outer tube. The suction tube 41 is connected to the nozzle unit 200. The suction device 40 sucks the content inside the suction tube 400 through the suction tube 41. By this suction, the liquid and excised piece or the like near the tip of the suction tube 400 are sucked.

The control unit 30 controls the tube pump 60 and the actuator unit 300. Specifically, the control unit 30 transmits drive signals via the actuator cable 31 and the pump cable 32 while the foot switch 35 is pressed down with a foot. The drive signal transmitted via the actuator cable 31 drives a piezoelectric element (not illustrated) included in the actuator unit 300. The drive signal transmitted via the pump cable 32 drives the tube pump 60. Therefore, while the user keeps his or her foot down on the foot switch 35, the liquid is intermittently ejected. When the user does not keep his or her foot down on the foot switch 35, the ejection of the liquid stops.

A simulated organ will be described hereafter. A simulated organ is also called a phantom. In this embodiment, a simulated organ is an artificial object whose part is to be excised by the liquid ejection device 20. The simulated organ in this embodiment is used in a surgical simulation for the purpose of performance evaluation of the liquid ejection device 20, practice of operation of the liquid ejection device 20, and the like.

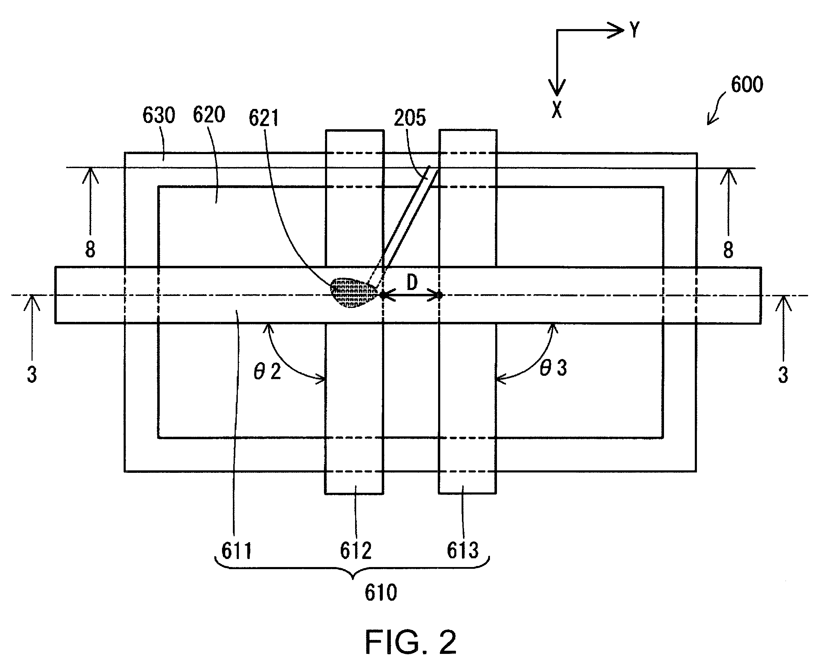

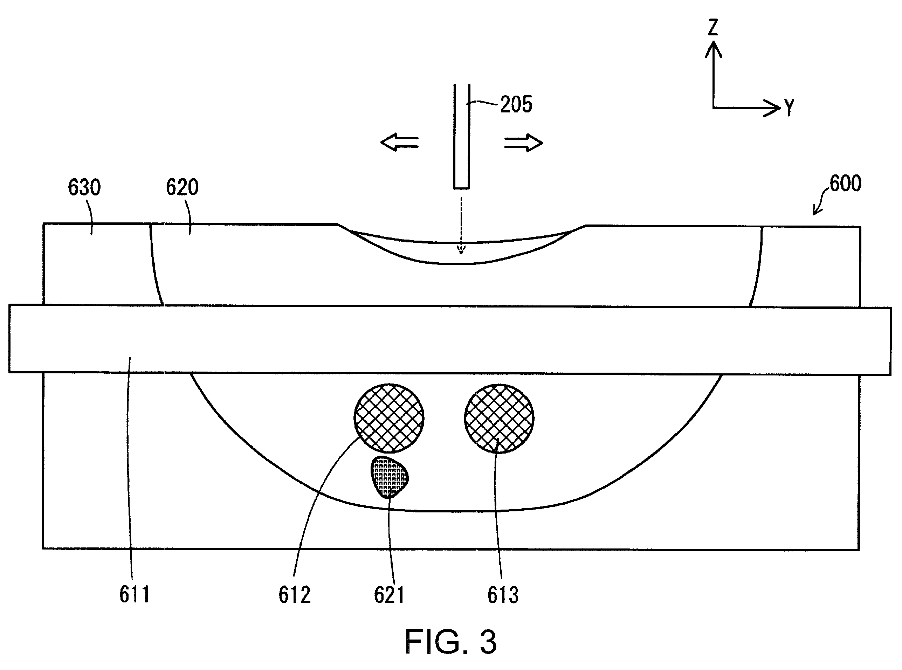

FIGS. 2 and 3 show a simulated organ 600. FIG. 2 is a top view. FIG. 3 is a cross-sectional view. The cross section shown in FIG. 3 is taken along 3-3 in FIG. 2. In this embodiment, the horizontal plane is defined as an X-Y plane, and the vertical direction (direction of depth) is defined as a Z-direction.

The simulated organ 600 includes a first simulated blood vessel 611, a second simulated blood vessel 612, a third simulated blood vessel 613, a simulated tissue 620, and a support member 630. The first simulated blood vessel 611, the second simulated blood vessel 612 and the third simulated blood vessel 613 may be collectively called simulated blood vessels 610.

The simulated blood vessels 610 are artificial objects simulating blood vessels in a living body (for example, human cerebral blood vessels). In this embodiment, simulated blood vessels 610 are formed as solid members. The simulated blood vessels 610 are members that should avoid damage in a surgical simulation.

The simulated tissue 620 is an artificial object simulating peripheral tissues around blood vessels in a living body (for example, brain tissues) and fills the peripheries of the simulated blood vessels 610. The simulated tissue 620 includes a simulated tumor 621. In FIG. 2, the simulated tissue 620 is illustrated as a transparent member in order to illustrate the simulated blood vessels 610. However, the actual simulated tissue 620 is not transparent. The support member 630 is a metallic container which supports the simulated blood vessels 610 and the simulated tissue 620.

The liquid ejected intermittently from the ejection tube 205 gradually excises the simulated tissue 620. As the excision proceeds, the simulated blood vessels 610 become exposed. The exposed simulated blood vessels 610 may be subjected to the liquid ejection in some cases. The simulated blood vessels 610 become damaged when subjected to an ejection under conditions exceeding their strength.

As shown in FIGS. 2 and 3, the first simulated blood vessel 611 is arranged in such a way as to intersect with each of the second simulated blood vessel 612 and the third simulated blood vessel 613. The intersection in this embodiment refers to grade-separated intersection as a general expression and refers to a skew position as a mathematical expression. Specifically, the first simulated blood vessel 611 intersects with each of the second simulated blood vessel 612 and the third simulated blood vessel 613 when projected on the X-Y plane, and is shifted in the Z-direction from the second simulated blood vessel 612 and the third simulated blood vessel 613 at the points of intersection.

The first simulated blood vessel 611, the second simulated blood vessel 612 and the third simulated blood vessel 613 extend horizontally straight. The second simulated blood vessel 612 and the third simulated blood vessel 613 are arranged at deeper positions than the first simulated blood vessel 611. Therefore, the second simulated blood vessel 612 and the third simulated blood vessel 613 are arranged at deeper positions than the first simulated blood vessel 611 at the sites intersecting with the first simulated blood vessel 611.

The angle θ2 shown in FIG. 2 is an angle that satisfies the condition of 0 degrees < θ2 ≤ 90 degrees, of the angles formed by the first simulated blood vessel 611 and the second simulated blood vessel 612 in the X-Y plane. The angle θ2 is, for example, 10 degrees θ2 ≤ 90 degrees. In this embodiment, the angle θ2 is 90 degrees.

The angle θ3 shown in FIG. 2 is an angle that satisfies the condition of 0 degrees < θ3 ≤ 90 degrees, of the angles formed by the first simulated blood vessel 611 and the third simulated blood vessel 613 in the X-Y plane. The angle θ3 is, for example, 10 degrees θ3 ≤ 90 degrees. In this embodiment, the angle θ3 is 90 degrees. The angle θ2 and the angle θ3 may be the same value or different values.

The distance D shown in FIG. 2 is the distance between the second simulated blood vessel 612 and the third simulated blood vessel 613 in the X-Y plane. The distance D is defined at a site where the spacing between the second simulated blood vessel 612 and the third simulated blood vessel 613 is the narrowest. In this embodiment, since the second simulated blood vessel 612 and the third simulated blood vessel 613 are parallel to each other, the distance D may be measured at an arbitrary position in the X-direction (direction in which the second simulated blood vessel 612 and the third simulated blood vessel 613 extend).

The distance D is set, for example, to 0 mm or longer and 3 mm or shorter. In this embodiment, the distance D is set to 3 mm. If the distance D is 0 mm, it means that the second simulated blood vessel 612 and the third simulated blood vessel 613 are in contact with each other.

In FIG. 3, the hatchings on the second simulated blood vessel 612 and the third simulated blood vessel 613 mean that the color of the second simulated blood vessel 612 and the third simulated blood vessel 613 is different from the color of the first simulated blood vessel 611. In this embodiment, the first simulated blood vessel 611 is formed in yellow, whereas the second simulated blood vessel 612 and the third simulated blood vessel 613 are formed in red. These colorings indicate that the second simulated blood vessel 612 and the third simulated blood vessel 613 are arranged at deeper positions than the first simulated blood vessel 611.

The simulated tumor 621 is a site set as an extirpation target in a surgical simulation. The simulated tumor 621 is formed in a color that is different from the simulated blood vessels 610 and the simulated tissue 620. Specifically, the simulated tissue 620 is formed in white and the simulated tumor 621 is formed in green.

As shown in FIG. 2, the simulated tumor 621 is arranged at a site where the first simulated blood vessel 611 and the second simulated blood vessel 612 intersect with each other on the X-Y plane. The simulated tumor 621 is arranged below the first simulated blood vessel 611 and below the second simulated blood vessel 612, as shown in FIG. 3.

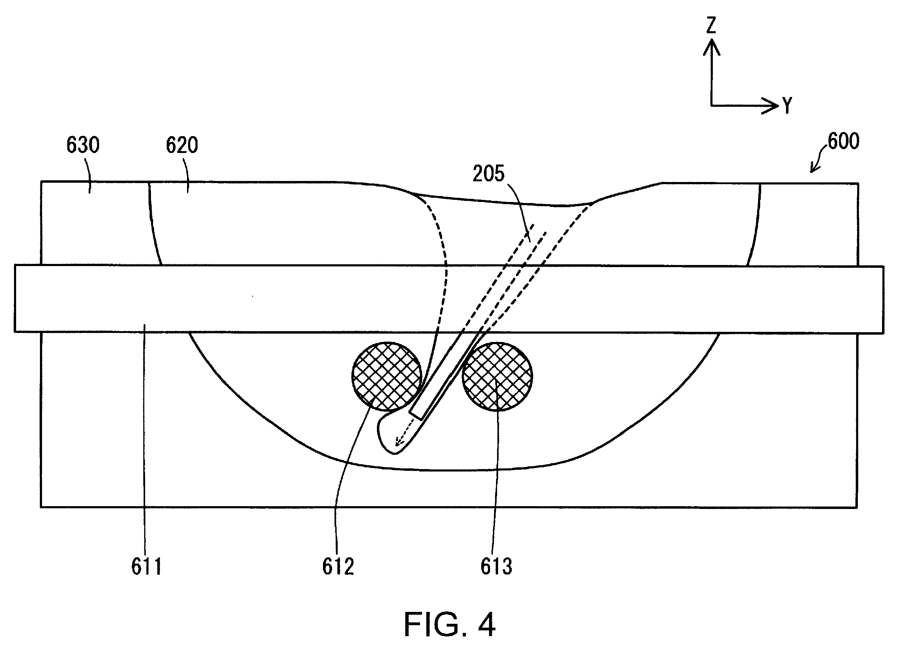

FIG. 4 is a cross-sectional view taken along 3-3 in FIG. 2 and shows the state where the simulated tumor 621 has been extirpated. The ejection tube 205 shown in FIG. 4 is illustrated as approaching the simulated tumor 621 from behind the first simulated blood vessel 611 in this illustration. The ejection tube 205 shown in FIG. 2 is in the same approaching state.

As described so far, using the simulated organ 600 in which the simulated tumor 621 is arranged in a way that makes it is difficult to extirpate the simulated tumor 621, a circumstance closer to a living body can be reproduced. The arrangement that makes it difficult to extirpate the simulated tumor 621 refers to an arrangement in which the simulated tumor 621 is arranged below a site where simulated blood vessels 610 (first simulated blood vessel 611 and second simulated blood vessel 612) intersect with each other and in which another simulated blood vessel 610 (third simulated blood vessel 613) is arranged closely to the site of intersection.

In addition, since the first simulated blood vessel 611, the second simulated blood vessel 612 and the third simulated blood vessel 613, the simulated tissue 620, and the simulated tumor 621 are formed in different colors, it is easy to understand which element is excised or damaged.

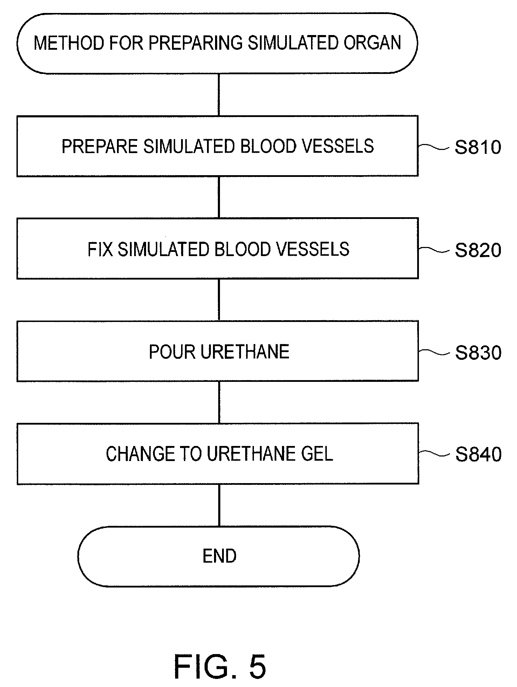

FIG. 5 is a flowchart showing a method for preparing the simulated organ 600. First, the simulated blood vessels 610 are prepared (S810). In this embodiment, PVA (polyvinyl alcohol) is employed as the material of the simulated blood vessels 610. Then, a solid member with a predetermined strength is formed by molding.

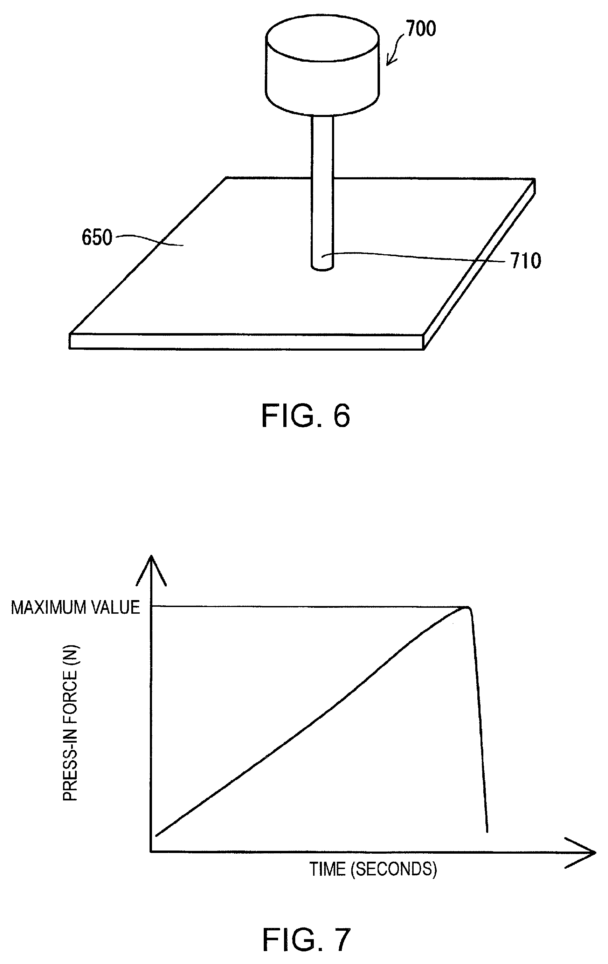

The strength of the simulated blood vessels 610 will be described. FIG. 6 is a view for explaining a strength test on the material of the simulated blood vessels 610. Using the following test, a material with a strength close to the intended blood vessels is prepared.

A sheet 650 is a test sample formed by shaping the material of the simulated blood vessels 610 into a sheet. The sheet 650 is placed on a table (not illustrated) and fixed to the table at its peripheral edges. The table has a hole opening at a position opposite to a pin 700 via the sheet 650. In the strength test, the pin 700 is pressed into the sheet 650 so as to deform the sheet 650 until the sheet 650 breaks. A load cell (not illustrated) is used to press in the pin 700, and the press-in force is measured in real time.

FIG. 7 shows an example of experiment data obtained from the strength test. The vertical axis represents press-in force. The horizontal axis represents time. The pressing of the pin 700 is carried out at 1 mm/sec. Therefore, the press-in force increases almost linearly with time, as shown in FIG. 7.

The press-in force increases in this manner and eventually drops sharply. The sharp drop in the press-in force occurs because of the breaking of the sheet 650. Based on the sharp drop in the press-in force, the maximum value of the press-in force can be decided. The material strength is acquired as a stress value (MPa) by dividing the maximum value (N) of the press-in force by the area of a tip 710 of the pin 700 (in this embodiment, 0.5 mm²).

By this test, a material with a strength close to the strength of the blood vessels to be reproduced is prepared as the material of the simulated blood vessels 610. Using the material thus prepared, the simulated blood vessels 610 are produced.

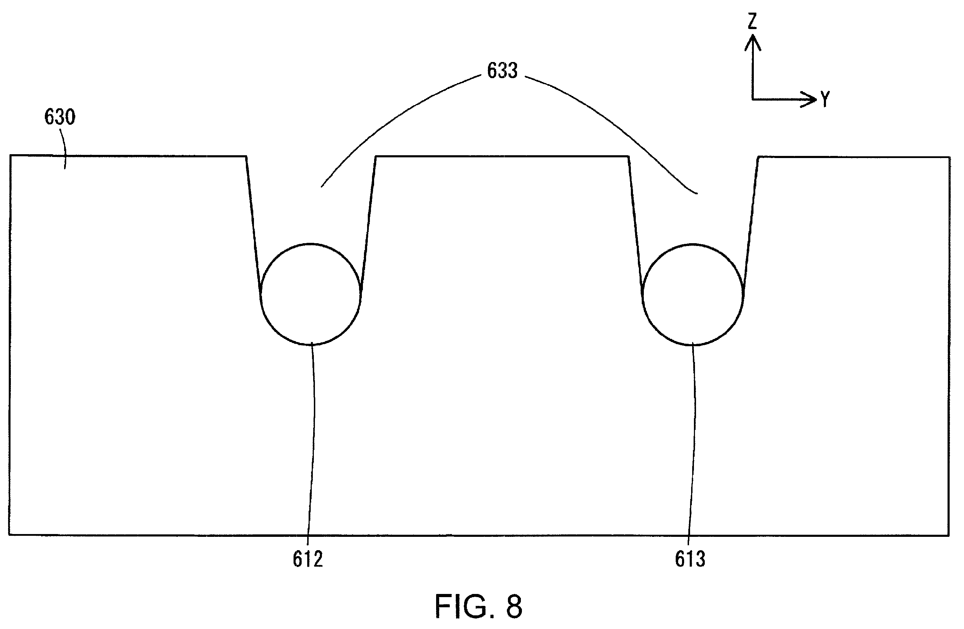

Next, the simulated blood vessels 610 are fixed to the support member 630 (S820). FIG. 8 is a cross-sectional view (Y-Z plane) showing the state where S820 has been executed on the second simulated blood vessel 612 and third simulated blood vessel 613. FIG. 8 shows a cross section taken along 8-8 in FIG. 2 (Y-Z plane).

As shown in FIG. 8, grooves 633 are provided in the support member 630. The grooves 633 are provided on both sides of the support member 630. The second simulated blood vessel 612 and the third simulated blood vessel 613 are fitted into the grooves 633 in S820 and thus fixed to the support member 630. The same applies to the first simulated blood vessel 611 as well.

Next, a stirred mixture of a base resin of urethane and a hardener is poured into the support member 630 (S830). Subsequently, the urethane changes into a urethane gel in the form of an elastomer gel (S840). Thus, the simulated tissue 620 is formed and the simulated organ 600 is completed.

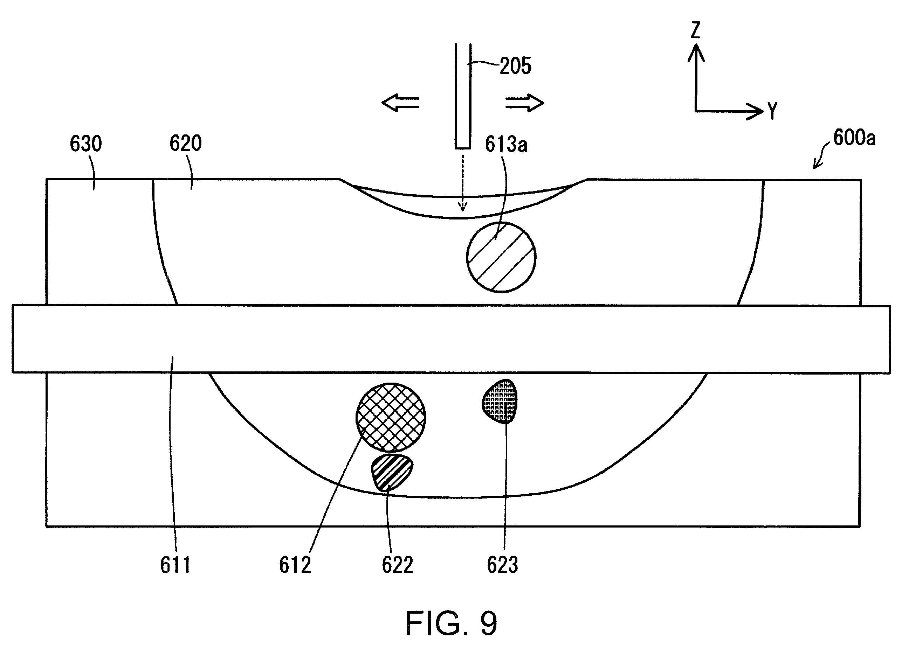

A modification will be described. FIG. 9 shows a cross section of simulated organ 600a. The simulated organ 600a has a third simulated blood vessel 613a instead of the third simulated blood vessel 613 and has a simulated tumor 622 and a simulated tumor 623 instead of the simulated tumor 621.

The second simulated blood vessel 612 is arranged at a deeper position than the first simulated blood vessel 611 at a site intersecting with the first simulated blood vessel 611, as in the embodiment. Meanwhile, the third simulated blood vessel 613a is arranged at a shallower position than the first simulated blood vessel 611 at a site intersecting with the first simulated blood vessel 611.

The third simulated blood vessel 613a is formed in a color (for example, orange) that is different from the color of the first simulated blood vessel 611 and the color of the second simulated blood vessel 612. With such colorings, the depths of the simulated blood vessels 610 can be indicated by their colors. Consequently, for example, if a simulated blood vessel 610 intersecting with the first simulated blood vessel 611 is damaged, whether this simulated blood vessel 610 is the second simulated blood vessel 612 or the third simulated blood vessel 613a can be easily understood.

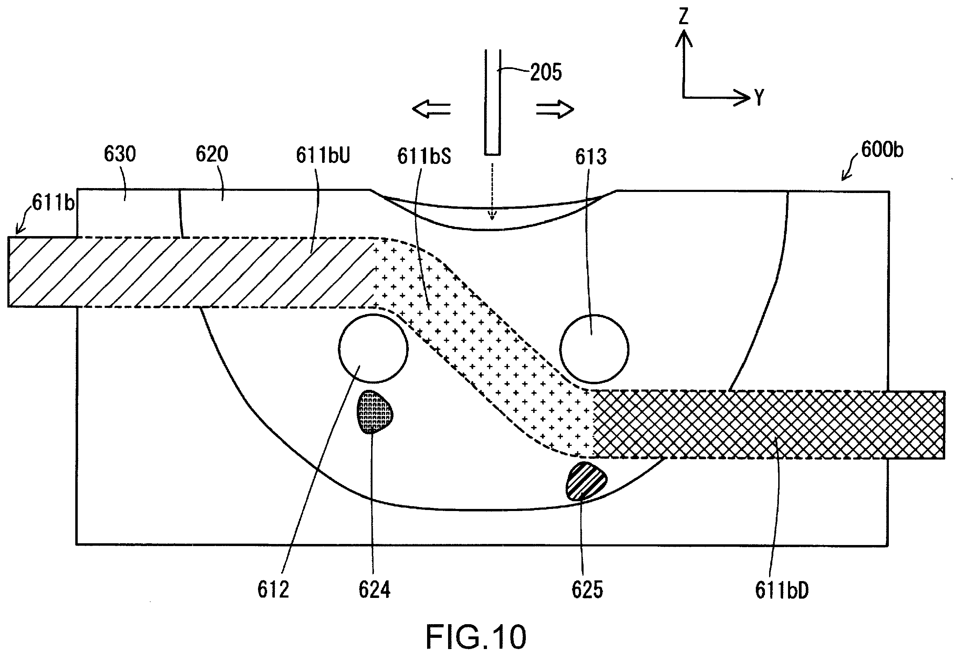

Another modification will be described. FIG. 10 shows a cross section of a simulated organ 600b. The simulated organ 600b includes a first simulated blood vessel 611b instead of the first simulated blood vessel 611.

The second simulated blood vessel 612 is arranged at a deeper position than the first simulated blood vessel 611b at a site intersecting with the first simulated blood vessel 611b, as in the embodiment. Meanwhile, the third simulated blood vessel 613 is arranged at a shallower position than the first simulated blood vessel 611b at a site intersecting with the first simulated blood vessel 611b. However, the second simulated blood vessel 612 and the third simulated blood vessel 613 are arranged at the same depth, similarly to those in the embodiment.

The first simulated blood vessel 611b is divided into an upper part 611bU, a slant part 611bS, and a lower part 611bD, as shown in FIG. 10. The upper part 611bU and the lower part 611bD are sites extending horizontally. The upper part 611bU is arranged at a shallower position than the second simulated blood vessel 612. That is, the second simulated blood vessel 612 is arranged at a deeper position than the first simulated blood vessel 611b at a site intersecting with the first simulated blood vessel 611b, as in the embodiment.

The lower part 611bD is arranged at a deeper position than the third simulated blood vessel 613. That is, the third simulated blood vessel 613 is arranged at the same depth as the second simulated blood vessel 612 but is arranged at a shallower position than the first simulated blood vessel 611b at a site intersecting with the first simulated blood vessel 611b.

The slant part 611bS is a site connecting the upper part 611bU and the lower part 611bD together and extends slantly between the second simulated blood vessel 612 and the third simulated blood vessel 613.

The upper part 611bU, the slant part 611bS and the lower part 611bD are formed in different colors from each other. Each of these colors is different from each of the colors of the second simulated blood vessel 612, the third simulated blood vessel 613, the simulated tissue 620 and the simulated tumor 621. With such colorings, the user can discriminate each site of the first simulated blood vessel 611b by its color.

The invention is not limited to the embodiment, examples and modifications in this specification and can be implemented with various configurations without departing from the scope of the invention. For example, technical features described in the embodiment, examples and modifications corresponding to technical features of each configuration described in the summary of the invention can be replaced or combined according to need, in order to solve a part or all of the foregoing problems or in order to achieve a part or all of the advantageous effects. Technical features can be deleted according to need, unless described as essential in the specification. For example, the following examples can be employed.

The simulated organ may be excised by measures other than a liquid that is intermittently ejected. For example, the simulated organ may be excised by a liquid that is continuously ejected or by a liquid provided with an excision capability by ultrasonic waves or an optical maser. Alternatively, the simulated organ may be excised by a metallic surgical knife.

The number of the simulated blood vessels may be any number equal to or greater than two.

The material of the simulated blood vessels is not limited to the above example. For example, the material may be a synthetic resin other than PVA (for example, urethane) or may be a natural resin.

The material of the simulated tissue is not limited to the above example. For example, the material may be a rubber-based material other than urethane or may be PVA.

The simulated blood vessels may be prepared using ejection and deposition (3D printing by an inkjet method or the like).

The simulated tissue may be prepared using 3D printing.

The simulated blood vessels and the simulated tissue may be collectively prepared using 3D printing.

The arrangement of the simulated blood vessels is not limited to the above examples. For example, the simulated blood vessels may be curved or bent in an S-shape and may be bent within the horizontal plane (within the X-Y plane).

In the arrangement of the simulated blood vessels, it suffices that at least two simulated blood vessels intersect with each other. For example, the second simulated blood vessel and the third simulated blood vessel may intersect with each other.

The positional relation between the simulated blood vessels that do not intersect with each other may be parallel as in the embodiment or need not be parallel.

The simulated blood vessels may be hollow members. As a technique for forming the simulated blood vessels as hollow members, the following method may be employed. That is, PVA before hardening is applied to the outer circumferences of extra fine wires, and the extra fine wires are pulled out after the hardening of the PVA. The outer diameter of the extra fine wires is made to correspond to the inner diameter of the blood vessels. The extra fine wires are made of metal, and for example, formed by piano wires.

The colors of the simulated blood vessels may be any colors. For example, all of the simulated blood vessels may be in the same color. Alternatively, different colors may be used for the site of intersection and for the other sites.

As a method for discriminating the damaged simulated blood vessel, the colors of the simulated blood vessels need not be different from each other. For example, the color of simulated blood may be used. That is, the simulated blood vessels may be formed as hollow members, and the first simulated blood vessel and the second simulated blood vessel may contain simulated bloods in different colors from each other.

While the configuration using the piezoelectric element as the actuator is employed in the embodiment, a configuration in which a liquid is ejected using an optical maser, or a configuration in which a liquid is pressurized by a pump or the like and thus ejected, may be employed. The configuration in which a liquid is ejected using an optical maser refers to the configuration in which a liquid is irradiated with an optical maser to generate air bubbles in the liquid, so that a pressure rise in the liquid caused by the generation of the air bubbles can be utilized.

## Claims

1. A simulated organ comprising:
a first simulated blood vessel; and
a second simulated blood vessel intersecting with the first simulated blood vessel.

2. The simulated organ according to claim 1, further comprising:
a third simulated blood vessel intersecting with the first simulated blood vessel.

3. The simulated organ according to claim 2, wherein
a distance between the second simulated blood vessel and the third simulated blood vessel is 3 mm or shorter.

4. The simulated organ according to claim 2 or 3 , wherein
the second simulated blood vessel is arranged at a deeper position than the first simulated blood vessel, at a site intersecting with the first simulated blood vessel, and
the third simulated blood vessel is arranged at a shallower position than the first simulated blood vessel, at a site intersecting with the first simulated blood vessel.

5. The simulated organ according to claim 2 or 3 , wherein
a site intersecting with the first simulated blood vessel, of the second simulated blood vessel, is arranged at a deeper position than a site intersecting with the first simulated blood vessel, of the third simulated blood vessel.

6. The simulated organ according to any one of the preceding claims, wherein
a color appearing in the second simulated blood vessel when damaged is different from a color appearing in the third simulated blood vessel when damaged.

7. The simulated organ according to claim 2 or 3, wherein
a site intersecting with the second simulated blood vessel, of the first simulated blood vessel, is arranged at a shallower position than a site intersecting with the third simulated blood vessel.

8. The simulated organ according to any one of the preceding claims, wherein
the first simulated blood vessel is in different colors between a site arranged at a shallower position than the second simulated blood vessel and a site arranged at a deeper position than the third simulated blood vessel.

9. The simulated organ according to claim 8, wherein
a color of a site situated between a site intersecting with the second simulated blood vessel and a site intersecting with the third simulated blood vessel, of the first simulated blood vessel, is different from a color of the site intersecting with the second simulated blood vessel and different from a color of the site intersecting with the third simulated blood vessel.

10. The simulated organ according to any one of the preceding claims, wherein
the first simulated blood vessel is in a different color from a color of the second simulated blood vessel.

11. The simulated organ according to any one of the preceding claims, further comprising a simulated tissue filling peripheries of the first and second simulated blood vessels,
wherein the simulated tissue is in different colors between a first site situated below the second simulated blood vessel and a second site different from the first site.

12. The simulated organ according to claim 11, wherein
the first site is a site situated below a site where the first simulated blood vessel and the second simulated blood vessel intersect with each other.

13. The simulated organ according to claim 11, wherein
a color of the first site is different from a color of the first simulated blood vessel and different from a color of the second simulated blood vessel.

14. The simulated organ according to claim 10, wherein
the simulated tissue is excised by a liquid provided with an excision capability.
